# EUROPEAN PATENT APPLICATION

(11) **EP 3 940 433 A1**
(43) Date of publication of application: **19.01.2022**
(21) Application number: 21185092.0
(22) Date of filing: 12.07.2021
(51) Int. Cl.: G02B 5/04, F21V 8/00, G02B 27/00, G02B 27/01

(54) **WAVEGUIDE AND HEAD-MOUNTED DISPLAY DEVICE**

(30) Priority: 16.07.2020 CN 202010684543
(71) Applicant: Coretronic Corporation, Hsin-Chu 300 (TW)
(72) Inventor: CHIEN, HUNG-TA, 300 Hsin-Chu (TW)
(74) Representative: Ter Meer Steinmeister & Partner

(57) **Abstract**

A waveguide and a head-mounted display device are provided. The waveguide is used for transmitting an image beam. The waveguide includes a plate, at least one coupling-in prism, and microstructures. The plate has a first surface and a second surface. The image beam enters the plate through the first surface. The coupling-in prism is located on the second surface. The coupling-in prism has a first inclined surface, and the image beam is reflected by the first inclined surface and then transmitted in the plate. The microstructures are located on the second surface. Each microstructure has a second inclined surface. The image beam exits from the first surface after being reflected by the second inclined surface. A difference between refractive indices of the coupling-in prism and the microstructures is less than 0.05.

## Description

This application claims the priority of CHINA application serial no. 202010684543.5, filed on JULY 16, 2020.

### BACKGROUND

### Technical Field

The invention relates to an optical element and a display device, and more particularly to a waveguide and a head-mounted display device.

### Description of Related Art

With the advancement of display technology and people's desire for high technology, the technologies of virtual reality and augmented reality have gradually matured, among which head-mounted display (HMD) is the display used to realize these technologies. The development history of head-mounted displays can be traced back to the 1970s when the US military used an optical projection system to project images or text messages on a display component into the eyes of users. In recent years, as micro-displays are enhanced in resolution and reduced in size and power consumption, the head-mounted displays have developed into a kind of portable display device. In addition to the military field, other fields such as industrial production, simulation training, stereo display, medical treatment, sports, navigation, and electronic games have also seen a growth in the display technology of head-mounted displays which occupy an important position in the above fields.

There is existing a head-mounted display device that uses a waveguide element as an optical combiner. The waveguide element is mainly composed of a coupling-in prism, a waveguide plate, and a coupling-out microstructure. Specifically, in this waveguide element, a transmission path of image light is as follows: the image light enters the waveguide plate through the coupling-in prism, and then is totally reflected and propagated until entering a coupling-out area. The coupling-out microstructure is present in the coupling-out area to couple the image light out of the light waveguide. However, due to a difference between refractive indices of the coupling-in prism, the waveguide plate and the coupling-out microstructure, dispersion may occur, which may lead to color separation of the image light to be finally seen by the human eye, thus reducing image quality.

In order to reduce the color separation of images caused by dispersion, several manufacturing methods of a waveguide element have been proposed, as follows. One of the methods is to manufacture the element structures of the coupling-in prism, the waveguide plate and the coupling-out microstructure using homogeneous materials. However, since the coupling-in prism and the coupling-out microstructure are obviously different in size, the difficulties in a process for controlling structural formation increase, resulting in difficulty in processing.

Another method is to manufacture the coupling-in prism, the waveguide plate and the coupling-out microstructure respectively using different materials and then bond them together. In this method, the coupling-in prism and the waveguide plate are often manufactured by cutting and polishing optical glass due to optical surface requirements of the coupling-in prism and the waveguide plate due to their large size. However, when the coupling-in prism and the waveguide plate are made of optical glass with high refractive index, the optical glass with high refractive index may exhibit a relatively large difference in its refractive index for lights of different colors, and dispersion is very likely to occur during refraction between the waveguide plate and the coupling-out microstructure. Therefore, in this method, the coupling-in prism and the waveguide plate need to be manufactured using general optical glass to reduce dispersion. However, in the case of manufacturing the coupling-in prism and the waveguide plate using general optical glass, an image beam may propagate within the waveguide plate at relatively large pitches, such that it strikes the coupling-out microstructure at relatively large pitches, and finally, multiple image beams leave the waveguide at relatively large pitches. At this point, if the pupil of the human eye is located between two image beams and the pupil is so small that it cannot receive any image light or can receive relatively little image light, the human eye will not be able to see the image light at this specific angle, and image defects or dark areas occur, affecting the image quality.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The invention provides a waveguide which reduces dispersion of an image beam during transmission and improves brightness uniformity of an image.

The invention provides a head-mounted display device which provides good-quality images.

Other objectives and advantages of the invention may be further understood from the technical features disclosed in the present invention.

The object is solved by the features of the independent claims preferred embodiments are given in the dependent claims.

In order to achieve one or part or all of the above objectives or other objectives, an embodiment of the invention provides a waveguide. The waveguide is configured to transmit an image beam, and includes a plate, at least one coupling-in prism, and a microstructure. The plate has a first surface and a second surface, and the image beam enters the plate through the first surface. The at least one coupling-in prism is located on the second surface and has a first inclined surface, and the image beam is reflected by the first inclined surface and then transmitted in the plate. A plurality of the microstructures are located on the second surface, and each of the microstructures has a second inclined surface. The image beam is reflected by the second inclined surface and then exits from the first surface of the plate, and a difference between a refractive index of the coupling-in prism and a refractive index of the microstructure is less than 0.05.In one or more embodiments, which could be independently combined with each other, a refractive index of the plate may be greater than the refractive index of the coupling-in prism and the refractive index of the plurality of microstructures.

In one or more embodiments, which could be independently combined with each other, the first inclined surface of the coupling-in prism may be inclined relative to the second surface to form a first included angle.

The second inclined surface of the plurality of microstructures may be inclined relative to the second surface to form a second included angle

The first included angle and the second included angle may be equal or the first included angle and the second included angle have a difference less than 3 degrees.

In one or more embodiments, which could be independently combined with each other, each of the plurality of microstructures may have a reflective layer.

In one or more embodiments, which could be independently combined with each other, the reflective layer may be located on the second inclined surface.

In one or more embodiments, which could be independently combined with each other, the reflective layer may be a specular reflective layer.

In one or more embodiments, which could be independently combined with each other, the wave guide may further comprise a compensation layer covering the second inclined surface of the plurality of microstructures.

In one or more embodiments, which could be independently combined with each other, the compensation layer may form a first plane on a side away from the second inclined surface of the plurality of microstructures and the first plane is parallel to the first surface and the second surface.

In one or more embodiments, which could be independently combined with each other, a height of the plurality of microstructures may exceed one-tenth of a height of the plate.

In one or more embodiments, which could be independently combined with each other, the compensation layer may cover an entire area of the second surface of the plate.

In one or more embodiments, which could be independently combined with each other, in an area on the second surface of the plate where the coupling-in prism is provided, the compensation layer may be located between the coupling-in prism and the plate.

In one or more embodiments, which could be independently combined with each other, a height of the plurality of microstructures may be less than one-tenth of a height of the plate.

In one or more embodiments, which could be independently combined with each other, the compensation layer may cover an area on the second surface of the plate where the plurality of microstructures are provided or an entire area of the second surface of the plate.

In one or more embodiments, which could be independently combined with each other, in an area on the second surface of the plate where the coupling-in prism is provided, the compensation layer may be located between the coupling-in prism and the plate.

In one or more embodiments, which could be independently combined with each other, the compensation layer may be made of the same material as the plate.

In one or more embodiments, which could be independently combined with each other, each of the plurality of microstructures may have a reflective layer.

In one or more embodiments, which could be independently combined with each other, the reflective layer may be located on the second inclined surface.

In one or more embodiments, which could be independently combined with each other, the reflective layer may be a specular reflective layer or a partially reflective layer.

In one or more embodiments, which could be independently combined with each other, the plurality of microstructures may form a micromirror array.

In one or more embodiments, which could be independently combined with each other,

In order to achieve one or part or all of the above objectives or other objectives, an embodiment of the invention provides a head-mounted display device. The head-mounted display device is configured to be disposed in front of at least one eye of a user, and includes a display unit and the aforementioned waveguide. The display unit is configured to provide an image beam, and the waveguide is configured to transmit the image beam to the at least one eye of the user.

In one or more embodiments, which could be independently combined with each other, the waveguide may comprise a plate, at least one coupling-in prism, and a plurality of microstructures.

In one or more embodiments, which could be independently combined with each other, the plate may have a first surface and a second surface, and the image beam may enter the plate through the first surface.

In one or more embodiments, which could be independently combined with each other, the at least one coupling-in prism may be located on the second surface.

In one or more embodiments, which could be independently combined with each other, the coupling-in prism may have a first inclined surface.

In one or more embodiments, which could be independently combined with each other, the image beam may be reflected by the first inclined surface and then transmitted in the plate.

In one or more embodiments, which could be independently combined with each other, the plurality of microstructures may be located on the second surface.

In one or more embodiments, which could be independently combined with each other, each of the plurality of microstructures may have a second inclined surface, the image beam may be reflected by the second inclined surface and may then exit from the first surface of the plate.

A difference between a refractive index of the coupling-in prism and a refractive index of the plurality of microstructures may be less than 0.05.

In one or more embodiments, which could be independently combined with each other, a refractive index of the plate may be greater than the refractive index of the coupling-in prism and the refractive index of the plurality of microstructures.

In one or more embodiments, which could be independently combined with each other, the first inclined surface of the coupling-in prism may be inclined relative to the second surface to form a first included angle, the second inclined surface of the plurality of microstructures may be inclined relative to the second surface to form a second included angle, and the first included angle and the second included angle may be equal or the first included angle and the second included angle may have a difference less than 3 degrees.

In one or more embodiments, which could be independently combined with each other, each of the plurality of microstructures may have a reflective layer, the reflective layer may be located on the second inclined surface, and the reflective layer may be a specular reflective layer.

In one or more embodiments, which could be independently combined with each other, the waveguide may further comprises: a compensation layer, covering the second inclined surface of the plurality of microstructures

In one or more embodiments, which could be independently combined with each other, the compensation layer may form a first plane on a side away from the second inclined surface of the plurality of microstructures, and the first plane may be parallel to the first surface and the second surface.

In one or more embodiments, which could be independently combined with each other, the compensation layer is may be made of the same material as the plate.

In one or more embodiments, which could be independently combined with each other, a height of the plurality of microstructures may exceed one-tenth of a height of the plate, the compensation layer may cover an entire area of the second surface of the plate, and in an area on the second surface of the plate where the coupling-in prism is provided, the compensation layer may be located between the coupling-in prism and the plate.

In one or more embodiments, which could be independently combined with each other, a height of the plurality of microstructures may be less than one-tenth of a height of the plate, the compensation layer may cover an area on the second surface of the plate where the plurality of microstructures are provided or an entire area of the second surface of the plate, and in an area on the second surface of the plate where the coupling-in prism is provided, the compensation layer may be located between the coupling-in prism and the plate.

In one or more embodiments, which could be independently combined with each other, each of the plurality of microstructures may have a reflective layer, the reflective layer may be located on the second inclined surface, and the reflective layer may be a specular reflective layer or a partially reflective layer.

In one or more embodiments, which could be independently combined with each other, the plurality of microstructures may form a micromirror array.

Based on the above, the embodiments of the invention have at least one of the following advantages or effects. In the embodiment of the invention, in the head-mounted display device and the waveguide, the refractive index of the coupling-in prism and the refractive index of the microstructure are set to be substantially equal or have a difference, and the first included angle of the coupling-in prism and the second included angle of the microstructure are set to be substantially equal or have a difference, so that differences in the dispersion angle of the image beam during refraction between the plate and the coupling-in prism and during refraction between the plate and the microstructure can compensate each other. In this way, dispersion of the three primary color beams of the image beam when exiting from the first surface of the plate can be reduced, thereby preventing the occurrence of color separation in the image beam or reducing the possibility that color separation is observed by the human eye. On the other hand, since the plate of the waveguide of the head-mounted display device has a high refractive index, multiple image beams may leave the waveguide in a relatively dense manner, which may increase the uniformity of the image to be seen by the human eye and reduce the occurrence of image defects or dark areas.

The coupling-in prism, the waveguide plate, and the coupling-out microstructure are respectively made using different materials. It is required that the refractive indices of the coupling-in prism and the coupling-out microstructure be equal or have a difference less than 0.05. Color separation of the image caused by dispersion may be reduced. An advantage of this method is that, a high refractive index waveguide plate may be used instead of high refractive index coupling-in prisms and coupling-out microstructures. The high refractive index waveguide plate may enable an image beam to propagate within the waveguide plate at relatively small pitches, thereby enabling the image beam to strike the coupling-out microstructure at relatively small pitches, finally resulting in a plurality of image beams leaving the waveguide at relatively small pitches, by which a situation is avoided in which when the pupil of the human eye is located between two image beams and the pupil is so small that it cannot receive any image light or can receive relatively little image light, the human eye is not be able to see the image light at this specific angle, and image defects or dark areas occur.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 schematic diagram of a head-mounted display device of an embodiment of the invention.
FIG. 2 is a schematic diagram of an optical path of an image beam passing through a waveguide of FIG. 1.
FIG. 3 is a schematic diagram of an optical path of an image beam passing through a waveguide according to another embodiment of the invention.
FIG. 4 is a schematic diagram of an optical path of an image beam passing through a waveguide according to a comparative example.
FIG. 5 is a schematic diagram of an optical path of a head-mounted display device according to another embodiment of the invention.
FIG. 6 is a schematic exploded diagram of a waveguide according to still another embodiment of the invention.
FIG. 7 is a schematic exploded diagram of a waveguide according to still another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

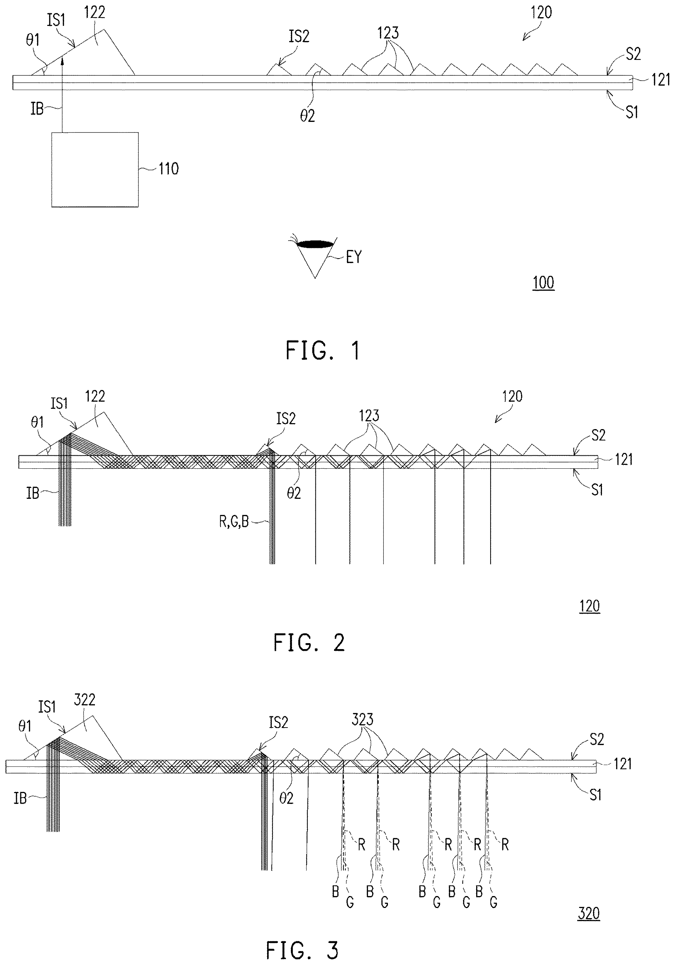

FIG. 1 is a schematic structural diagram of a head-mounted display device according to an embodiment of the invention. FIG. 2 is a schematic diagram of an optical path of an image beam passing through a waveguide of FIG. 1. With reference to FIGS. 1 and 2, in this embodiment, a head-mounted display device 100 is configured to be disposed in front of at least one eye EY of a user. The head-mounted display device 100 includes a display unit 110 and a waveguide 120. The display unit 110 is configured to provide an image beam IB, and the waveguide 120 is configured to transmit the image beam IB to the at least one eye EY of the user. For example, in this embodiment, the display unit 110 may be a display or a light field display, and may be a projection-type light field display. The display unit 110 may include optical components (not shown) such as a collimated light source, a lens, a lens array, and a display element (light valve), wherein a beam emitted by the collimated light source sequentially passes through the lens and the lens array and enters the display element. The display element is configured to convert the beam into the image beam IB with image information or the image beam IB with depth information, but the invention is not limited thereto. In this way, the image beam IB provided by the display unit 110 has current light field information, by which a refocusing effect can be achieved, and image depth information can be provided. In addition, as shown in FIG. 2, in this embodiment, an example is given in which the head-mounted display device 100 achieves a unidirectional pupil expansion function by configuring the waveguide 120, but the invention is not limited thereto. In other embodiments, another waveguide 120 may be added to the head-mounted display device 100, and a bidirectional pupil expansion function is achieved by configuring the waveguide 120 and by serial connection of optical paths.

Specifically, as shown in FIGS. 1 and 2, in this embodiment, the waveguide 120 includes a plate 121, at least one coupling-in prism 122 and a microstructure 123. The at least one coupling-in prism 122 and a plurality of the microstructures 123 are located on a second surface S2. The plate 121 has the second surface S2. For example, in this embodiment, the thickness of the plate 121 is less than 2 millimeters (mm), the width of the coupling-in prism 122 is between 3 mm and 7 mm, and the width of the bottom of the microstructure 123 is between 0.4 mm and 1.2 mm. The direction of the width of the coupling-in prism 122 and the width of the bottom of the microstructure 123 is perpendicular to the direction of the thickness of the plate 121. In addition, in this embodiment, the number of the coupling-in prism 122 is, for example, one, but the invention is not limited thereto. In other embodiments, the number of the coupling-in prism may be more than one. On the other hand, in this embodiment, the material of the microstructure 123 includes, for example, a polymer material, and the microstructure 123 may be fabricated on the plate 121 by an ultraviolet (UV) imprinting method or a thermal transfer method. In other embodiments, for example, the plate 121 and the coupling-in prism 122 may be manufactured by polishing optical glass with different refractive indices respectively and then be bonded together. More specifically, in this embodiment, the refractive index of the plate 121 is greater than the refractive index of the coupling-in prism 122 and the refractive index of the microstructure 123, and the refractive index of the coupling-in prism 122 and the refractive index of the microstructure 123 are substantially equal. In this embodiment, for a beam with a specific main light emission wavelength, a difference between the refractive index of the coupling-in prism 122 and the refractive index of the microstructure 123 is less than 0.05.

Furthermore, as shown in FIGS. 1 and 2, the plate 121 has a first surface S1 and the second surface S2, the coupling-in prism 122 has a first inclined surface IS1, and each microstructure 123 has a second inclined surface IS2. More specifically, as shown in FIG. 2, in this embodiment, the coupling-in prism 122 and each microstructure 123 each have a reflective layer, the reflective layer of the coupling-in prism 122 is located on the first inclined surface IS1 of the coupling-in prism 122, the reflective layer of each microstructure 123 is located on the second inclined surface IS2 of each microstructure 123, and the reflective layer is a specular reflective layer. In other words, in this embodiment, a plurality of the microstructures 123 may be formed as a micromirror array. In addition, as shown in FIG. 1, the first surface S1 and the second surface S2 of the plate 121 are, for example, perpendicular to the direction of the user's line of sight. Furthermore, in this embodiment, the first inclined surface IS1 of the coupling-in prism 122 is inclined relative to the second surface S2 to form a first included angle θ1, the second inclined surface IS2 of the microstructure 123 is inclined relative to the second surface S2 to form a second included angle θ2, and the first included angle θ1 and the second included angle θ2 are substantially equal.

In this way, as shown in FIG. 2, when the image beam IB enters the plate 121 through the first surface S1 and passes through the second surface S2, the image beam IB may be transmitted in the plate 121 after being reflected by the first inclined surface IS1 of the coupling-in prism 122. In addition, the image beam IB in the plate 121 may be transmitted by total reflection to an area on the second surface S2 of the plate 121 where the microstructure 123 is provided. When the image beam IB is transmitted to the second inclined surface IS2 of the microstructure 123, the image beam IB may be reflected by the second inclined surface IS2 of the microstructure 123 and exit from the first surface S1 of the plate 121. In this way, the waveguide 120 may be used to transmit the image beam IB to at least one eye EY of the user, and to display an image in the eye of the user. As shown in FIGS. 1 and 2, in this embodiment, a flat penetrating area may further exist between each of the microstructures 123, so that ambient light may pass through the waveguide 120 and be transmitted to the at least one eye EY of the user, thereby enabling the head-mounted display device 100 to achieve an augmented reality function. In addition, in this embodiment, the microstructures 123 may be controlled to have equal pitches therebetween, but may also be controlled to have unequal pitches therebetween to adjust brightness uniformity of an image to be viewed. In this embodiment, the pitch between the microstructures 123 may be less than 2 mm, and distribution density of the microstructures 123 gradually increases in a direction away from the coupling-in prism 122.

As shown in FIGS. 1 and 2, in this embodiment, since the refractive index of the coupling-in prism 122 and the refractive index of the microstructure 123 are substantially equal, and the first included angle θ1 of the coupling-in prism 122 and the second included angle θ2 of the microstructure 123 are also substantially equal, differences in the dispersion angle of the image beam IB during refraction between the plate 121 and the coupling-in prism 122 and during refraction between the plate 121 and the microstructure 123 may compensate each other. In this way, dispersion of the three primary color beams (red beam, green beam, and blue beam) of the image beam IB when exiting from the first surface S1 of the plate 121 can be reduced, thereby preventing the occurrence of color separation in the image beam IB.

Furthermore, in this embodiment, since the influence of the refractive index of the plate 121 on color separation of the image beam IB can be reduced by the above configuration, the refractive index of the plate 121 does not need to be greatly limited, and may be greater than the refractive index of the coupling-in prism 122 and the refractive index of the microstructure 123. Moreover, the plate 121 may be made of optical glass with a high refractive index. In this way, in this embodiment, since the plate 121 has a high refractive index, total reflection of the image beam IB may occur in the plate 121 at reduced pitches, the image beam IB may be totally reflected and propagated in the plate 121 in a relatively dense manner, and may thus strike the microstructure 123 in a relatively dense manner. In this way, multiple image beams IB may leave the waveguide 120 in a relatively dense manner, thereby increasing the uniformity of the image to be seen by the human eye and reducing the occurrence of image defects or dark areas.

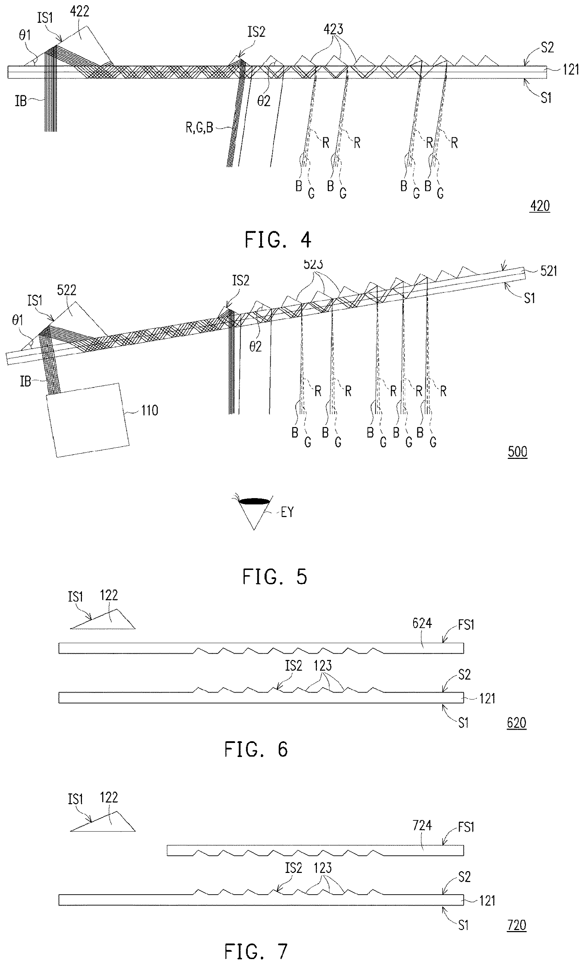

In addition, in this embodiment, although an example is given in which the refractive index of the coupling-in prism 122 and the refractive index of the microstructure 123 are substantially equal, and the first included angle θ1 of the coupling-in prism 122 and the second included angle of the microstructure 123 are also substantially equal, the invention is not limited thereto. In other embodiments, the refractive index of the coupling-in prism 122 and the refractive index of the microstructure 123 may have a difference, based on which the first included angle θ1 of the coupling-in prism 122 and the second included angle of the microstructure 123 may also have a difference, such that the head-mounted display device 100 and the waveguide 120 may achieve similar effects. The details are given below with reference to FIG. 3 and FIG. 4.

FIG. 3 is a schematic diagram of an optical path of the image beam IB passing through the waveguide 120 according to another embodiment of the invention. FIG. 4 is a schematic diagram of an optical path of the image beam IB passing through the waveguide 120 according to a comparative example. Please refer to FIGS. 3 and 4. A waveguide 320 of FIG. 3 and a waveguide 420 of FIG. 4 are similar to the waveguide 120 of FIG. 1, and the differences are as follows. In the embodiment of FIG. 3, for a beam with a specific main light emission wavelength, a difference between the refractive index of a coupling-in prism 322 and the refractive index of a microstructure 323 is less than 0.05. For example, the image beam IB is composed of three primary color beams (red beam R, green beam G, and blue beam B). For the same color beam, the difference between the refractive index of the prism 322 and the microstructure 323 is less than 0.05, and in the embodiment of FIG. 3, the difference between the first included angle θ1 and the second included angle θ2 is less than 3 degrees. On the other hand, in the comparative example of FIG. 4, for a beam with a specific light main emission wavelength, the difference between the refractive index of a coupling-in prism 422 and the refractive index of a microstructure 423 is also less than 0.05, but the first included angle θ1 and the second included angle θ2 are substantially equal.

In this way, as shown in FIGS. 3 and 4, in the comparative example of FIG. 4, since the refractive index of the coupling-in prism 422 and the refractive index of the microstructure 423 for the beam with a specific main light emission wavelength have a difference, the traveling directions of the three primary color beams (red beam R, green beam G, and blue beam B) in the image beam IB leaving the plate 121 deviate from each other. On the other hand, in the embodiment of FIG. 3, since there is a difference between the first included angle θ1 and the second included angle θ2, in the image beam IB leaving the plate 121, the traveling direction of the green beam G which mainly provides image brightness can be compensatively corrected and does not deviate. In this way, by compensating optical path deviation caused by the difference between the refractive index of the coupling-in prism 322 and the refractive index of the microstructure 323 with the difference between the first included angle θ1 of the coupling-in prism 322 and the second included angle θ2 of the microstructure 323, the traveling direction of the image beam IB is adjusted, thereby maintaining the position of the image to be seen by the human eye.

Since the refractive index of the coupling-in prism 322 of the waveguide 320 and the refractive index of the microstructure 323 have a difference, and the first included angle θ1 of the coupling-in prism 322 and the second included angle θ2 of the microstructure 323 also have a difference, differences in the dispersion angle of the image beam IB during refraction between the plate 121 and the coupling-in prism 322 and during refraction between the plate 121 and the microstructure 323 may compensate each other, such that color separation of the image beam IB becomes less noticeable and less likely to be observed by the human eye EY, and thus, the waveguide 320 may achieve similar effects and advantages to those of the waveguide 120, and the details thereof are omitted herein. Moreover, when the waveguide 320 is applied to the head-mounted display device 100, the head-mounted display device 100 may achieve similar effects and advantages, and the details thereof are omitted herein.

FIG. 5 is a schematic diagram of an optical path of the head-mounted display device 100 according to another embodiment of the invention. Please refer to FIG. 5. A head-mounted display device 500 of FIG. 5 is similar to the head-mounted display device 100 of FIG. 1, and the differences are as follows. As shown in FIG. 5, in this embodiment, a plate 521 of a waveguide 520 is not disposed perpendicular to the user's line of sight. Furthermore, in this embodiment, in the head-mounted display device 500, the size of the second included angle θ2 of a microstructure 523 may be adjusted so that the image beam IB provided by the head-mounted display device 500 displays an image in the center of the user's field of view.

Moreover, in this embodiment, since the refractive index of a coupling-in prism 522 of the waveguide 520 and the refractive index of the microstructure 523 may be set to be substantially equal or have a difference, and the first included angle θ1 of the coupling-in prism 522 and the second included angle θ2 of the microstructure 523 may be set to be substantially equal or have a difference, differences in the dispersion angle of the image beam IB during refraction between the plate 521 and the coupling-in prism 522 and during refraction between the plate 521 and the microstructure 523 may compensate each other, such that the head-mounted display device 500 and the waveguide 520 may achieve similar effects and advantages to those of the head-mounted display device 100 and the waveguide 120 or the waveguide 320, and the details thereof are omitted herein.

FIG. 6 is a schematic exploded diagram of a waveguide according to still another embodiment of the invention. Please refer to FIG. 6. A waveguide 620 of FIG. 6 is similar to the waveguide 120 of FIG. 1, and the differences are as follows. As shown in FIG. 6, in this embodiment, the waveguide 620 further includes a compensation layer 624. The compensation layer 624 covers the second inclined surface IS2 of a plurality of the microstructures 123, wherein the compensation layer 624 forms a first plane FS1 on a side away from the second inclined surface IS2 of the microstructures 123, and the first plane FS1 is parallel to the first surface S1 and the second surface S2. Moreover, in this embodiment, the compensation layer 624 is made of the same material as the plate 121, and the reflective layer of each microstructure 123 is a specular reflective layer or a partially reflective layer. As shown in FIG. 6, in this embodiment, when the height of the microstructure 123 exceeds one-tenth of a height of the plate 121, the compensation layer 624 covers the entire area of the second surface S2 of the plate 121, and in an area on the second surface S2 of the plate 121 where the coupling-in prism 122 is provided, the compensation layer 624 is located between the coupling-in prism 122 and the plate 121. In addition, the compensation layer 624 is fabricated in the same manner as the plate 121. An optical glue may be disposed between the compensation layer 624 and the plate 121 to fill the gap. The refractive index of the optical glue is close to or equal to the refractive index of the plate 121.

In this way, in this embodiment, since the refractive index of the coupling-in prism 122 of the waveguide 620 and the refractive index of the microstructure 123 may be set to be substantially equal or have a difference, and the first included angle θ1 of the coupling-in prism 122 and the second included angle θ2 of the microstructure 123 may be set to be substantially equal or have a difference, differences in the dispersion angle of the image beam IB during refraction between the plate 121 and the coupling-in prism 122 and during refraction between the plate 121 and the microstructure 123 may compensate each other, such that the waveguide 620 may achieve similar effects and advantages to those of the waveguide 120, and the details thereof are omitted herein. Moreover, when the waveguide 620 is applied to the head-mounted display device 100, the head-mounted display device 100 may achieve similar effects and advantages, and the details thereof are omitted herein.

FIG. 7 is a schematic exploded diagram of a waveguide according to still another embodiment of the invention. Please refer to FIG. 7. A waveguide 720 of FIG. 7 is similar to the waveguide 620 of FIG. 6, and the differences are as follows. As shown in FIG. 7, in this embodiment, when the height of the microstructure 123 is less than one-tenth of a height of the plate 121, a compensation layer 724 of the waveguide 720 may only cover an area on the second surface S2 of the plate 121 where the microstructure 123 is provided. Moreover, in this embodiment, since the refractive index of the coupling-in prism 122 of the waveguide 120 and the refractive index of the microstructure 123 may be set to be substantially equal or have a difference, and the first included angle θ1 of the coupling-in prism 122 and the second included angle θ2 of the microstructure 123 may be set to be substantially equal or have a difference, differences in the dispersion angle of the image beam IB during refraction between the plate 121 and the coupling-in prism 122 and during refraction between the plate 121 and the microstructure 123 may compensate each other, such that the waveguide 720 may achieve similar effects and advantages to those of the waveguide 620, and the details thereof are omitted herein. Moreover, when the waveguide 720 is applied to the head-mounted display device 100, the head-mounted display device 100 may achieve similar effects and advantages, and the details thereof are omitted herein.

In summary, the embodiments of the invention have at least one of the following advantages or effects. In the embodiments of the invention, in the head-mounted display device and the waveguide, by setting the refractive index of the coupling-in prism and the refractive index of the microstructure to be substantially equal or have a difference, and by setting the first included angle of the coupling-in prism and the second included angle of the microstructure to be substantially equal or have a difference, the differences in the dispersion angle of the image beam during refraction between the plate and the coupling-in prism and during refraction between the plate and the microstructure may compensate each other. In this way, dispersion of the three primary color beams of the image beam when exiting from the first surface of the plate can be reduced, thereby preventing the occurrence of color separation in the image beam or reducing the possibility that color separation is observed by the human eye. On the other hand, since the waveguide plate of the head-mounted display device has a high refractive index, multiple image beams may leave the waveguide in a relatively dense manner, which may increase the uniformity of the image to be seen by the human eye and reduce the occurrence of image defects or dark areas.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A waveguide configured to transmit an image beam (IB), wherein the waveguide comprises a plate (121), at least one coupling-in prism (122) and a plurality of microstructures (123), wherein:
the plate (121) has a first surface (S1) and a second surface (S2), and the image beam (IB) enters the plate through the first surface (S1);
the at least one coupling-in prism (122) is located on the second surface (S2), wherein the coupling-in prism (122) has a first inclined surface (IS1), and the image beam (IB) is reflected by the first inclined surface (IS1) and then transmitted in the plate (121); and
the plurality of microstructures (123) are located on the second surface (S2), wherein each of the plurality of microstructures (123) has a second inclined surface (IS2), the image beam (IB) is reflected by the second inclined surface (IS2) and then exits from the first surface (S1) of the plate (121), and a difference between a refractive index of the coupling-in prism (122) and a refractive index of the plurality of microstructures (123) is less than 0.05.

2. The waveguide of claim 1, wherein a refractive index of the plate (121) is greater than the refractive index of the coupling-in prism (122) and the refractive index of the plurality of microstructures (123).

3. The waveguide of claim 1 or 2, wherein the first inclined surface (IS1) of the coupling-in prism (122) is inclined relative to the second surface (S2) to form a first included angle.

4. The waveguide of claim 1, 2 or 3, wherein the second inclined surface (IS2) of the plurality of microstructures (123) is inclined relative to the second surface (S2) to form a second included angle.

5. The waveguide of claim 4, wherein the first included angle and the second included angle are equal or the first included angle and the second included angle have a difference less than 3 degrees.

6. The waveguide of any one of the preceding claims, wherein each of the plurality of microstructures (123) has a reflective layer.

7. The waveguide of claim 6, wherein the reflective layer is located on the second inclined surface (IS2), and the reflective layer is a specular reflective layer.

8. The waveguide of any one of the preceding claims, further comprising: a compensation layer (624), covering the second inclined surface (IS2) of the plurality of microstructures (123).

9. The waveguide of claim 8, wherein the compensation layer (624) forms a first plane (FS1) on a side away from the second inclined surface (IS2) of the plurality of microstructures (123), and the first plane (FS1) is parallel to the first surface (S1) and the second surface (S2).

10. The waveguide of any one of the preceding claims 8 or 9, wherein a height of the plurality of microstructures (123) exceeds one-tenth of a height of the plate (121), the compensation layer (624) covers an entire area of the second surface (S2) of the plate (121), and in an area on the second surface (S2) of the plate (121) where the coupling-in prism (122) is provided, the compensation layer (624) is located between the coupling-in prism (122) and the plate (121).

11. The waveguide of any one of the preceding claims 8-10, wherein a height of the plurality of microstructures (123) is less than one-tenth of a height of the plate (121), the compensation layer (624) covers an area on the second surface (S2) of the plate (121) where the plurality of microstructures (123) are provided or an entire area of the second surface (S2) of the plate (121), and in an area on the second surface (S2) of the plate (121) where the coupling-in prism (122) is provided, the compensation layer (624) is located between the coupling-in prism (122) and the plate (121).

12. The waveguide of any one of the preceding claims 8-11, wherein the compensation layer (624) is made of the same material as the plate (121).

13. The waveguide of any one of the preceding claims, wherein the each of the plurality of microstructures (123) has a reflective layer, the reflective layer is located on the second inclined surface (IS2), and the reflective layer is a specular reflective layer or a partially reflective layer.

14. The waveguide of any one of the preceding claims, wherein the plurality of microstructures (123) form a micromirror array.

15. A head-mounted display device configured to be disposed in front of at least one eye of a user, wherein the head-mounted display device (100) comprises a display unit (110) and a waveguide (120) as claimed in any one of the preceding claims, wherein:
the display unit (110) is configured to provide an image beam (IB); and
the waveguide (120) is configured to transmit the image beam (IB) to the at least one eye of the user.
